# EUROPÄISCHE PATENTANMELDUNG

(11) **EP 1 956 559 A2**
(43) Veröffentlichungstag der Anmeldung: **13.08.2008**
(21) Anmeldenummer: 07119080.5
(22) Anmeldetag: 23.10.2007
(51) Int. Cl.: G07C 5/08

(54) **Vorrichtung zum Fahrtenschreiben**

(30) Priorität: 12.02.2007 DE 202007002211 U; 18.09.2007 DE 202007013050 U
(71) Anmelder: Autohaus Wüst & Weigand GmbH & Co. KG, 91781 Weissenburg (DE)
(72) Erfinder: Kaufmann, Uwe, 91781 Weissenburg (DE)
(74) Vertreter: Hofstetter, Alfons J.

(57) **Zusammenfassung**

Die vorliegende Erfindung betrifft eine Vorrichtung zum Fahrtenschreiben für ein Kraftfahrzeug, bestehend aus mindestens einem digitalen Kontrollgerät, das mindestens eine Speicherkarte aufnimmt, von der das Kontrollgerät spezifische Daten wie Fahrerdaten oder Unternehmerdaten liest und darauf Daten wie Lenkzeiten, Ruhezeiten und Fahrgeschwindigkeitsdaten protokolliert, mindestens einem Drehzahlgeber (4), mindestens einem Polrad (3) und/oder mindestens einem rotierenden Teil, welches oder welche der oder die Drehzahlgeber (4) abtastet, wobei der Drehzahlgeber (4) ein Geschwindigkeitssignal erzeugt und dieses dem digitalen Kontrollgerät über eine Signalleitung (6) zuleitet und wobei das digitale Kontrollgerät den Drehzahlgeber (4) identifiziert. Erfindungsgemäß sind das Polrad (3) und/oder das rotierende Teil außerhalb des Fahrzeuggetriebes an einem Antriebsstrang des Kraftfahrzeugs angeordnet und der Drehzahlgeber (4) ist zum Polrad (3) und/oder zum rotierenden Teil hin ausgerichtet am Getriebedeckel (1) oder an einem Bodenelement des Kraftfahrzeugs befestigt.

## Beschreibung

Die Erfindung betrifft eine Vorrichtung zum Fahrtenschreiben für ein Kraftfahrzeug, bestehend aus mindestens einem digitalen Kontrollgerät, das mindestens eine Speicherkarte aufnimmt, von der das Kontrollgerät spezifische Daten wie Fahrerdaten oder Unternehmerdaten liest und darauf Daten wie Lenkzeiten, Ruhezeiten und Fahrgeschwindigkeitsdaten protokolliert, mindestens einem Drehzahlgeber, mindestens einem Polrad und/oder mindestens einem rotierenden Teil, welches oder welche der oder die Drehzahlgeber abtastet, wobei der Drehzahlgeber ein Geschwindigkeitssignal erzeugt und dieses dem digitalen Kontrollgerät über eine Signalleitung zuleitet und wobei das digitale Kontrollgerät den Drehzahlgeber identifiziert.

Seit 1. Mai 2006 müssen gewerblich eingesetzte Pkws mit einem zulässigen Gesamtgewicht von über 3,5 t mit digitalen Kontrollgeräten bzw. digitalen Tachographen ausgerüstet sein. Ein derartiges Gerät ist beispielsweise aus der Druckschrift DE 102005022115 A1 bekannt. Das vom Kontrollgerät benötigte Tachosignal wird durch einen im Getriebe des Fahrzeugs angeordneten Sensor erzeugt, der die Drehzahl eines im Getriebe angeordneten Getriebebauteils, also einer Getriebewelle abtastet. Nachteilig an diesen bekannten Anordnungen ist, dass das Fahrzeuggetriebe für die Aufnahme des Sensors ausgelegt sein muss. Da die Sensoren standardisiert sind, existieren für Neufahrzeuge Getriebe, in denen bereits ein Sensor integriert ist. Alternativ verfügen diese Getriebe bereits über eine Sensoraufnahme, in der der Sensor im Getriebe so positioniert wird, dass der Sensor die Drehzahl einer Welle innerhalb des Getriebes abtastet.

Die Getriebe älterer Fahrzeuge verfügen weder über Sensoraufnahmen noch sind ihre Getriebewellen dahingehend ausgestaltet, dass ihre Drehzahl durch einen Sensor erfasst werden kann. Da bei den älteren Fahrzeugen derzeit eine Sensoranordnung nur dadurch realisiert werden kann, indem das vorhandene Getriebe durch ein Getriebe mit abtastbarer Getriebewelle und Sensoraufnahme ersetzt wird, und diese Lösung unwirtschaftlich ist, wurde alternativ vorgeschlagen, vom Datenbus (MOST- oder D2B-Bus), der im Fahrzeug standardmäßig integriert ist und über den auch die Geschwindigkeitssignale für den Tachometer geleitet werden, das Geschwindigkeitssignal abzugreifen und derart zu modifizieren, dass es als Eingangssignal für die genannten digitalen Kontrollgeräte verwendet werden kann. Allerdings würde dies neben einer technischen Änderung der Signalverarbeitung in den Fahrzeugen auch eine Änderung der geltenden gesetzlichen Regelungen erfordern, da das für das digitale Kontrollgerät verwendete Tachosignal manipulationssicher sein muss. Insbesondere muss sichergestellt sein, dass das verwendete Tachosignal nicht so manipuliert werden kann, dass dem digitalen Kontrollgerät eine Ruhezeit des Fahrers anzeigt wird, wenn das Fahrzeug von ihm gerade gefahren wird.

Der vorliegenden Erfindung liegt deshalb das Problem zu Grunde, eine Vorrichtung anzugeben, mit der Kraftfahrzeuge, die keinen Fahrtenschreiber beinhalten, einfach nachgerüstet werden können und die das gesetzlich vorgeschriebene digitale Fahrtenschreiben durchführt.

Die Lösung der Aufgabe erfolgt durch die Vorrichtung mit den Merkmalen des Patentanspruchs 1.

Vorteilhafte Ausgestaltungen sind in den Unteransprüchen beschrieben.

Eine erfindungsgemäße Vorrichtung zum Fahrtenschreiben für ein Kraftfahrzeug besteht aus mindestens einem digitalen Kontrollgerät, das mindestens eine Speicherkarte aufnimmt, von der das Kontrollgerät spezifische Daten wie Fahrerdaten oder Unternehmerdaten liest und darauf Daten wie Lenkzeiten, Ruhezeiten und Fahrgeschwindigkeitsdaten protokolliert. Zudem umfasst die Vorrichtung mindestens einen Drehzahlgeber, mindestens ein Polrad und/oder mindestens ein rotierendes Teil, welches oder welche der oder die Drehzahlgeber abtastet, wobei der Drehzahlgeber ein Geschwindigkeitssignal erzeugt und dieses dem digitalen Kontrollgerät über eine Signalleitung oder drahtlos zuleitet und wobei das digitale Kontrollgerät den Drehzahlgeber identifiziert. Das Polrad und/oder das rotierende Teil sind erfindungsgemäß außerhalb des Fahrzeuggetriebes an einem Antriebsstrang des Kraftfahrzeugs angeordnet, wobei der Drehzahlgeber zum Polrad und/oder zum rotierenden Teil hin ausgerichtet und am Getriebedeckel oder an einem Bodenelement des Kraftfahrzeugs befestigt ist. Die erfindungsgemäße Vorrichtung ermöglicht ein einfaches und relativ kostengünstiges Nachrüsten von Kraftfahrzeugen mit einem Fahrtenschreiber, da kein Getriebe ausgetauscht werden muss und es zudem nicht erforderlich ist, die am Datenbus des Fahrzeugs (D2B-Bus oder MOST-Bus) anliegenden Tachosignale zu modifizieren und manipulationsfest auszulegen. Insbesondere hat sich gezeigt, dass durch die anspruchsgemäße Lösung bestehende Kraftfahrzeuge sehr einfach nachgerüstet werden können, indem ein an die entsprechenden Fahrzeuggetriebe bzw. Fahrzeugwellen angepasstes Polrad auf die betreffende Welle außerhalb des Getriebes aufgeschrumpft wird und der zugehörige Drehzahlgeber außerhalb des Getriebes fahrzeugfest befestigt wird. Dabei können das Polrad und/oder das rotierende Teil auf der Getriebeausgangswelle oder der Kardanwelle des Kraftfahrzeugs angeordnet sein. Gemäß weiteren erfindungsgemäßen Ausführungen kann die Getriebeausgangswelle einen An- oder Abtriebsflansch zum Anflanschen der Kardanwelle aufweisen, wobei das Polrad und/oder das rotierende Teil auf dem An- oder Abtriebsflansch befestigt sind. Beispielsweise kann das Polrad auf dem An- oder Abtriebsflansch aufgeschrumpft sein. Es ist aber auch möglich, dass das rotierende Teil mindestens ein Befestigungsbolzen oder mindestens eine Befestigungsschraube des An- oder Abtriebsflanschs ist und als Signalgeber für den Drehzahlgeber dient. Des Weiteren ist es möglich, dass das rotierende Teil ein Vorsprung oder eine Ausbuchtung auf der Getriebeausgangswelle oder der Kardanwelle des Kraftfahrzeugs oder ein Vorsprung oder eine Ausbuchtung auf dem An- oder Abtriebsflansch ist. Letztere Ausführungsformen weisen den Vorteil auf, dass bereits vorhandene Bauteile des Kraftfahrzeugs Verwendung finden, so dass die baulichen Eingriffe am Kraftfahrzeug gering gehalten werden können. Dadurch ergibt sich eine weitere deutliche Kostenersparnis bei der Nachrüstung von Kraftfahrzeugen mit Fahrtenschreibern. Es ist aber auch möglich, an dem An- oder Abtriebsflansch oder der Getriebeausgangswelle oder der Kardanwelle des Kraftfahrzeugs andere Markierungen - wie zum Beispiel optische Markierungen - die als Signalgeber dienen können, anzubringen. In einer weiteren erfindungsgemäßen Ausführungsform dient der An- oder Abtriebsflansch als das Signal liefernde Polrad oder rotierende Teil. Da das digitale Kontrollgerät jeden einzelnen Sensor identifiziert und einen Sensorwechsel abspeichert, wird durch die Verwendung fester, aus einem digitalen Kontrollgerät und einem Sensor bestehender Paare, höchste Manipulationssicherheit erreicht. Das digitale Kontrollgerät und der Sensor können zudem eine Einheit bilden und weitgehend unabhängig von der restlichen Fahrzeugelektronik betrieben werden, so dass das System einfach einzubauen und schwer zu manipulieren ist.

Dadurch, dass das digitale Kontrollgerät den spezifischen, am Getriebe des Fahrzeugs angebrachten und damit zum Fahrzeug gehörigen Drehzahlgeber eindeutig identifiziert, kann gemäß einer weiteren Ausführungsform der Erfindung das digitale Kontrollgerät die Fahr-Geschwindigkeitsdaten zusammen mit den Identifikationsdaten des Drehzahlgebers derart protokollieren, dass die protokollierten Fahrgeschwindigkeitsdaten eindeutig als auf den Messsignalen des spezifischen Drehzahlgebers beruhend gekennzeichnet sind. Jeder Drehzahlgeber liefert dabei ein eigenes Identifikationssignal, so dass das digitale Kontrollgerät nach Austausch des Drehzahlgebers diesen als neuen Drehzahlgeber erkennt. Das digitale Kontrollgerät kann dabei auch den Wechsel eines Drehzahlgebers protokollieren.

In einer weiteren vorteilhaften Ausgestaltung der Erfindung protokolliert das digitale Kontrollgerät die Fahr-Geschwindigkeitsdaten zusammen mit den Identifikationsdaten des Drehzahlgebers derart, dass die protokollierten Fahrgeschwindigkeitsdaten eindeutig als auf den Messsignalen des spezifischen Drehzahlgebers beruhend gekennzeichnet sind. Dies hat den Vorteil, dass ein Umschalten auf einen zweiten, im Fahrzeug versteckt eingebauten Sensor, der kein Geschwindigkeitssignal, sondern auch bei Fahrbetrieb Ruhesignale liefert und damit dem Fahrer Ruhezeiten bescheinigen würde, anhand der protokollierten Geschwindigkeitsdaten sichtbar ist. Mit den Geschwindigkeitsdaten wird verschlüsselt die Drehzahlgeber-Identitätsnummer gespeichert.

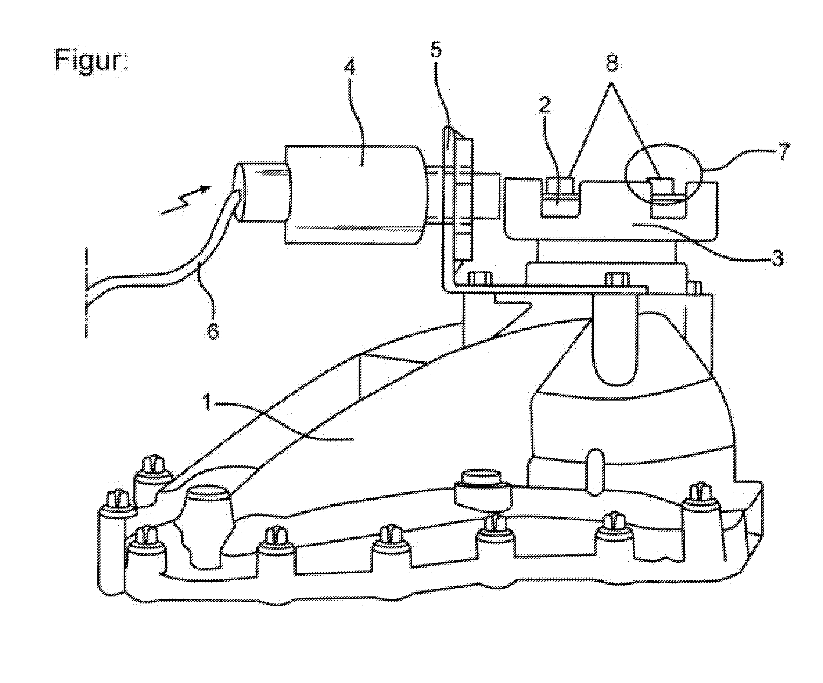

Weitere Merkmale und Vorteile der Erfindung gehen aus dem in der Figur dargestellten Ausführungsbeispiel der Erfindung hervor.

Die Figur zeigt dabei eine schematische Darstellung einer Anordnung eines Getriebes, eines Polrads 3 und eines Drehzahlgebers 4.

An einem Getriebedeckel 1 eines Fahrzeuggetriebes ist ein Halter 5 befestigt, an dem wiederum der Drehzahlgeber 4 befestigt ist. Der Drehzahlgeber 4 ist radial auf die Getriebeausgangswelle ausgerichtet. Er ist über eine Signalleitung 6 mit einem digitalen Kontrollgerät (nicht dargestellt) verbunden und liefert an dieses ein zur Drehzahl der der Getriebeabtriebswelle proportionales Signal. Auf einem Abtriebsflansch 2 der Getriebeausgangswelle ist ein Polrad 3 aufgeschrumpft. Dies weist umfangsseitig mehrere Unterbrechungen 7 auf, durch die das Abtastsignal des Drehzahlgebers 4 verbessert wird. Das Polrad 3 kann auf dem Abtriebsflansch 2 durch einen Sicherungsstift (nicht dargestellt) gesichert sein.

In einer nicht dargestellten Ausführungsform ist das Polrad auf der am An- oder Abtriebsflansch angeflanschten Kardanwelle befestigt bzw. auf diese aufgeschrumpft. Der Halter 5 ist alternativ am Fahrzeugboden fahrzeugfest befestigt. Ferner muss der Sensor nicht zwingend radial zur Welle ausgerichtet sein.

In weiteren, nicht dargestellten Ausführungsformen wird kein Polrad verwendet, sondern der Drehzahlgeber ist direkt auf die Kardanwelle oder den An- oder Abtriebsflansch ausgerichtet. Allein eine ungleichförmige Ausbildung der Kardanwelle oder des An- oder Abtriebsflansches über dem Umfang im Bereich des vom Sensor abgetasteten Feldes reichen aus, ein Sensorsignal zu erzeugen. Der Sensor ist dann radial auf den Schraubflansch zwischen An- oder Abtriebsflansch und Kardanwelle ausgerichtet.

Auch die Befestigungsbolzen bzw. Befestigungsschrauben 8 des Antriebsflansches 2 können dabei als rotierende Teile als Signalgeber verwendet werden. Der Drehzahlgeber 4 ist in diesem Fall zum rotierenden Teil bzw. zur Befestigungsschraube 8 hin ausgerichtet

## Patentansprüche

1. Vorrichtung zum Fahrtenschreiben für ein Kraftfahrzeug, bestehend aus mindestens einem digitalen Kontrollgerät, das mindestens eine Speicherkarte aufnimmt, von der das Kontrollgerät spezifische Daten wie Fahrerdaten oder Unternehmerdaten liest und darauf Daten wie Lenkzeiten, Ruhezeiten und Fahrgeschwindigkeitsdaten protokolliert, mindestens einem Drehzahlgeber (4), mindestens einem Polrad (3) und/oder mindestens einem rotierenden Teil, welches oder welche der oder die Drehzahlgeber (4) abtastet, wobei der Drehzahlgeber (4) ein Geschwindigkeitssignal erzeugt und dieses dem digitalen Kontrollgerät über eine Signalleitung (6) zuleitet und wobei das digitale Kontrollgerät den Drehzahlgeber (4) identifiziert, **dadurch gekennzeichnet, dass** das Polrad (3) und/oder das rotierende Teil außerhalb des Fahrzeuggetriebes an einem Antriebsstrang des Kraftfahrzeugs angeordnet ist und der Drehzahlgeber (4) zum Polrad (3) und/oder zum rotierenden Teil hin ausgerichtet am Getriebedeckel (1) oder an einem Bodenelement des Kraftfahrzeugs befestigt ist.

2. Vorrichtung nach Anspruch 1, **dadurch gekennzeichnet, dass** das Polrad (3) und/oder das rotierende Teil auf der Getriebeausgangswelle oder der Kardanwelle des Kraftfahrzeugs angeordnet sind.

3. Vorrichtung nach Anspruch 2, **dadurch gekennzeichnet, dass** die Getriebeausgangswelle einen An- oder Abtriebsflansch (2) zum Anflanschen der Kardanwelle aufweist.

4. Vorrichtung nach Anspruch 3, **dadurch gekennzeichnet, dass** das Polrad (3) und/oder das rotierende Teil auf dem An- oder Abtriebsflansch (2) befestigt sind.

5. Vorrichtung nach Anspruch 4, **dadurch gekennzeichnet, dass** das Polrad (3) auf dem An- oder Abtriebsflansch (2) aufgeschrumpft ist.

6. Vorrichtung nach Anspruch 4, **dadurch gekennzeichnet, dass** das rotierende Teil mindestens ein Befestigungsbolzen oder mindestens eine Befestigungsschraube (8) des An- oder Abtriebsflanschs (2) ist.

7. Vorrichtung nach Anspruch 1, **dadurch gekennzeichnet, dass** der An- oder Abtriebsflansch (2) als das Signal liefernde Polrad oder rotierende Teil dient.

8. Vorrichtung nach Anspruch 4, **dadurch gekennzeichnet, dass** das Polrad (3) auf dem An- oder Abtriebsflansch (2) durch einen Sicherungsstift gesichert ist.

9. Vorrichtung nach einem der vorhergehenden Ansprüche 1, **dadurch gekennzeichnet, dass** jeder Drehzahlgeber (4) ein eigenes Identifikationssignal liefert, so dass das digitale Kontrollgerät nach Austausch des Drehzahlgebers (4) diesen als neuen Drehzahlgeber erkennt.

10. Vorrichtung nach einem der vorhergehenden Ansprüche, **dadurch gekennzeichnet, dass** das digitale Kontrollgerät die Fahr-Geschwindigkeitsdaten zusammen mit den Identifikationsdaten des Drehzahlgebers (4) derart protokolliert, dass die protokollierten Fahrgeschwindigkeitsdaten eindeutig als auf den Messsignalen des spezifischen Drehzahlgebers (4) beruhend **gekennzeichnet** sind.

11. Vorrichtung nach einem der vorhergehenden Ansprüche, **dadurch gekennzeichnet, dass** das digitale Kontrollgerät den Wechsel eines Drehzahlgebers (4) protokolliert.

12. Vorrichtung nach einem der vorhergehenden Ansprüche, **dadurch gekennzeichnet, dass** das Polrad (3) und/oder das rotierende Teil mit einem Halter (5) am Getriebedeckel (1) oder dem Bodenelement des Kraftfahrzeugs befestigt ist.

13. Vorrichtung nach Anspruch 2, **dadurch gekennzeichnet, dass** das rotierende Teil ein Vorsprung oder eine Ausbuchtung auf der Getriebeausgangswelle oder der Kardanwelle des Kraftfahrzeugs ist.

14. Vorrichtung nach Anspruch 3, **dadurch gekennzeichnet, dass** das rotierende Teil ein Vorsprung oder eine Ausbuchtung auf dem An- oder Abtriebsflansch (2) ist.
